# DEMANDE DE BREVET EUROPEEN

(11) **EP 3 789 919 A1**
(43) Date de publication de la demande: **10.03.2021**
(21) Numéro de dépôt: 19306078.7
(22) Date de dépôt: 09.09.2019
(51) Int. Cl.: G06K 19/077

(54) **PROCÉDÉ DE FABRICATION D'UNE CARTE À PUCE MÉTALLIQUE AVEC MINI ANTENNE RELAIS**

(71) Demandeur: Thales Dis France SA, 92190 Meudon (FR)
(72) Inventeur: MENDEZ, Lucile, 13881 Gémenos Cedex (FR); SEBAN, Frederick, 13881 Gémenos Cedex (FR); COLOMBARD, Claude, 13881 Gémenos Cedex (FR); BUYUKKALENDER, Arek, 13881 Gémenos Cedex (FR); MERIDIANO, Jean-Luc, 13881 Gémenos Cedex (FR)
(74) Mandataire: Milharo, Emilien

(57) **Abrégé**

L'invention concerne un de fabrication d'une carte à puce (1) radiofréquence, ledit procédé comprenant les étapes de :
- formation d'un corps (2) de carte comportant une antenne relais et une couche de couverture sur au moins une face principale de l'insert,
- agencement d'un module (3, 3bis) équipé d'une antenne de module radiofréquence (L1), sur le corps de carte en regard de l'antenne relais pour un couplage radiofréquence ;
caractérisé en ce qu'il comprend les étapes suivantes :
- formation d'un insert métallique de corps de carte s'étendant jusqu'aux bords de la carte et comportant un espace perméable aux champs radiofréquences, débouchant sur au moins une face principale de l'insert, ledit espace étant configuré aux dimensions de ladite antenne relais pour la recevoir à l'intérieur et/ou en regard de cet espace,
- introduction de l'antenne relais dans ledit espace ;

L'invention concerne également une carte correspondante obtenue par le procédé.

## Description

### Domaine de l'invention.

L'invention concerne le domaine des cartes à puce métalliques sans-contact comportant des modules à puce de circuit intégré radiofréquence.

Elle vise en particulier la fabrication de carte à puce comportant une ou plusieurs feuille(s) ou plaque métallique(s).

Les cartes à puce peuvent être du type hybride (contacts et sans-contact) ou purement sans-contact (sans bornier de contacts électriques).

Les cartes à puce peuvent avoir un module de carte à puce comportant sur un substrat isolant, un transpondeur radiofréquence comprenant la puce et l'antenne. Ces modules de carte à puce radiofréquence sont généralement encartés dans une cavité du corps de carte.

L'invention vise plus particulièrement les cartes bancaires comportant un corps majoritairement métallique.

### Art antérieur

Le brevet FR 2743649 décrit un module de carte à puce, à antenne et/ou plages de contact, pouvant être incorporé dans une cavité de corps de carte ou pouvant former une étiquette électronique RFID.

Le brevet EP1031939 (B1) décrit une carte radiofréquence (ou sans-contact) comprenant une antenne relais bobinée en forme de huit, logée dans un corps de carte et couplée électromagnétiquement ou inductivement avec l'antenne du module. L'antenne relais comporte une bobine étroite concentrique avec l'antenne du module et une bobine large pour capter le champ électromagnétique d'un lecteur. Par ailleurs, on connait également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel que l'aluminium, le titane, de l'or. Le métal procure une sensation de lourdeur de la carte qui est très appréciée par les utilisateurs. Il donne aussi un aspect esthétique visible qui en fait un produit haut de gamme pour privilégiés.

### Problème technique.

On assiste actuellement à une demande accrue du public pour des cartes à puce lourdes intégrant des matières métalliques. Toutefois, la présence de métal perturbe fortement la communication radiofréquence et les procédés de fabrication sont rendus plus complexes pour obtenir des cartes conformes aux standards en vigueur de la carte à puce.

L'invention a pour objectif un procédé de fabrication aisé (ou simplifié) de cartes à puce qui puisse s'appliquer de préférence aux cartes avec métal dans le corps de carte.

En particulier, l'invention vise une structure de carte avec module à puce électronique radiofréquence RF.

La carte peut également avoir une structure satisfaisant les contraintes de tenue mécanique en terme d'ISO et de durabilité dans le temps. De telles cartes peuvent être conformes notamment au standard ISO 78016 et/ ou ISO / IEC 14443 ou équivalents pour effectuer des échanges de communication à contacts et/ou de proximité avec un lecteur à contacts ou de type NFC.

L'invention propose également une structure de carte métallique avec des bords métalliques visibles procurant un maximum de poids, présentant de bonnes performances radiofréquences et facile à fabriquer.

L'invention vise à résoudre les inconvénients ou objectifs précités.

### Résumé de l'invention.

L'invention consiste, selon un mode préféré de réalisation, à assurer la fonction radiofréquence d'un module transpondeur radiofréquence à l'aide d'une antenne relais (ou antenne passive ou amplificatrice) agencée dans le corps de carte métallique.

Le module radiofréquence est de préférence étroitement couplé par induction électromagnétique avec une antenne relais dont les dimensions permettent une surface de collecte de champ électromagnétique suffisante pour compenser les perturbations de communication existant dans les cartes métalliques.

L'invention peut prévoir d'utiliser un mini tag sans-contact (Dispositif radiofréquence comportant un transpondeur radiofréquence ou un module radiofréquence) associé à une antenne relais (avec ou sans ferrite), le tag pouvant être au format d'une cavité ménagée dans une plaque métallique.

L'antenne peut être de préférence réalisée par incrustation de fil conducteur dans une feuille polymère notamment en PVC.

De préférence, les antennes du module de transpondeur radiofréquence et l'antenne relais présentent une portion de surface de couplage en regard l'une de l'autre. De préférence, l'antenne relais présente une surface au moins égale à celle d'une surface externe de module de carte à puce qui s'étend au-delà de la surface de couplage du module radiofréquence. Par exemple, une surface de module est de 1,5 x 1 cm et la surface de l'antenne relais s'étendant au-delà de la surface de module peut être par exemple au moins égale à cette surface.

De préférence, cette surface hors de l'aplomb du module peut être égale de 2 à 4 fois la surface d'un module. Cette surface peut représenter une surface de collecte de champ électromagnétique à l'intérieur d'une plaque métallique et dépourvue de métal à l'aplomb de la surface de couplage ou de collecte.

De préférence, chaque cavité ou emplacement de module radiofréquence ou emplacement de l'antenne relais peut être configurée de manière à former respectivement un plan couplage en regard l'un de l'autre.

Une première étape peut consister à insérer un insert à antenne relais dans un espace ou logement côté face arrière d'une plaque métallique, puis à insérer le module à antenne de transpondeur dans une cavité du côté de la face avant opposée à la face arrière afin d'avoir les deux antennes couplées ensemble pour améliorer les performances de communication.

Tout moyen d'assemblage, tel que des adhésifs ou autre éléments de montage mécanique sont éventuellement prévus pour assembler les deux modules.

Le cas échéant, selon un mode de réalisation pratique, l'antenne relais peut être formé (ou noyé dans) un substrat ou bloc de matière polymère ou toute matière perméable aux champs électromagnétiques dont les dimensions correspondent à celle d'un évidement (ou cavité) d'une plaque de métal.

Le module à puce de transpondeur radiofréquence peut être monté sur un insert lui-même avant ou après assemblage de l'antenne dans la plaque métallique.

L'antenne relais peut être déposée nue dans la seconde cavité, puis recouverte de résine ou formée sur un substrat diélectrique à la manière d'un module de carte à puce.

A cet effet, l'invention a pour objet un procédé de fabrication d'une carte à puce radiofréquence, ledit procédé comprenant les étapes de :
- formation d'un corps de carte comportant une antenne relais et une couche de couverture isolante sur au moins une face principale de la carte,
- agencement d'un module équipé d'une antenne de module radiofréquence, sur le corps de carte en regard de l'antenne relais pour un couplage radiofréquence ; Le procédé est caractérisé en ce qu'il comprend les étapes suivantes :
- formation d'un insert métallique (4) de corps de carte s'étendant jusqu'aux bords de la carte, ledit insert comportant un espace perméable au champ radiofréquence débouchant sur les deux faces principales de l'insert et comportant ladite antenne relais à l'intérieur et/ou en regard de cet espace.

Selon d'autres caractéristiques, le procédé comprend les objets conformes aux revendications 1 à 12 et une carte à puce (correspondant au procédé) conforme aux revendications 13 à 15.

### Descriptif des figures :

- La figure 1A illustre une étape de fabrication d'une carte radiofréquence en cours de montage, avec un espace 7 de réception de l'antenne relais conformément au mode préféré de l'invention ;
- La figure 2 est une vue similaire à la figure 1A montrant un assemblage d'une plaque métallique 4 à des feuilles de couverture ;
- La figure 3 illustre une vue en coupe d'un exemple de carte 1A obtenue conformément à un premier mode de réalisation, pouvant comprendre les éléments de la figure 1, après insertion ou assemblage d'un module de transpondeur 10 et d'un module comprenant l'antenne relais ;
- La figure 4 illustre une vue en coupe d'un second exemple de carte obtenue conformément à un second mode de réalisation, pouvant comprendre les éléments de la figure 1, après insertion ou assemblage du module de transpondeur 3 et d'un module comprenant l'antenne relais ;
- La figure 5 illustre des étapes du procédé de l'invention selon le premier mode de réalisation conforme aux figures 2 à 3 ;
- La figure 6 illustre une structure de carte hybride (contacts et sans-contact) obtenu selon un troisième mode de réalisation avec un bloc d'antenne relais inséré dans une plaque métallique ;
- La figure 7 illustre une structure de carte purement sans-contact obtenu selon un troisième mode de réalisation avec un bloc comportant une antenne relais et un module à puce radiofréquence inséré dans une plaque métallique.
- La figure 8 illustre un bloc d'antenne relais avec un emplacement 40 de module (hybride ou purement sans- contact).

### Description.

D'une manière générale, des références identiques ou similaires d'une figure à l'autre représentent un élément identique ou similaire.

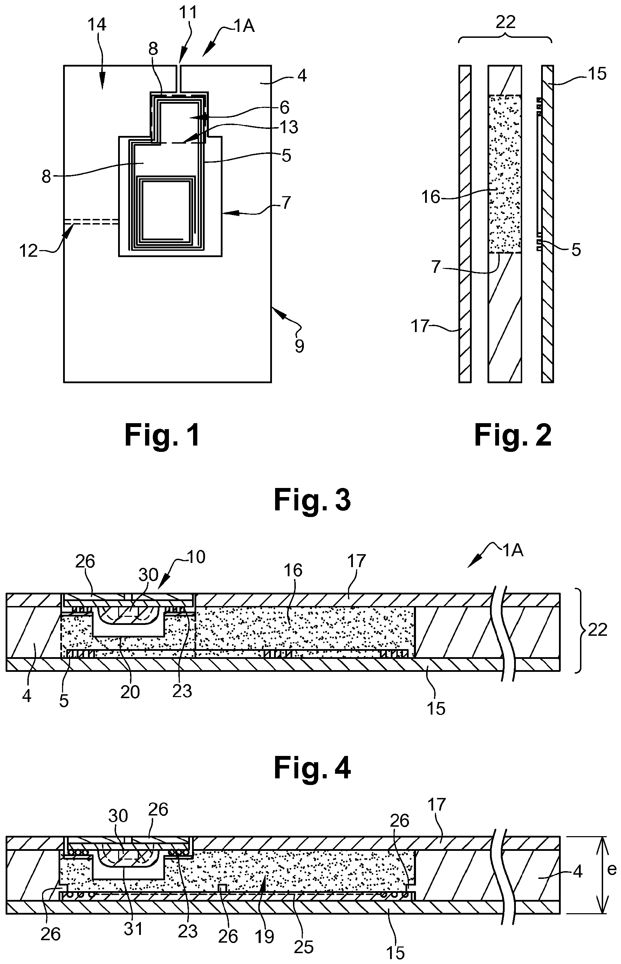

A la figure 1 est illustrée une étape du procédé de fabrication d'une carte à puce radiofréquence.

Le procédé comprend selon un mode préféré une formation d'un insert métallique 1A de corps de carte comportant une antenne relais 5 ; Il comprend aussi une étape d'agencement d'un module à puce et à antenne radiofréquence 10 sur le corps de carte dans un emplacement 6 en regard de l'antenne relais 5 pour un couplage radiofréquence avec le module 10 de transpondeur radiofréquence.

Dans l'exemple, l'insert 1A comporte ou est formé d'une plaque en métal 4. Alternativement, il pourrait comporter plusieurs plaques (ou autres éléments métalliques) assemblées ensemble. Le bord 9 de la plaque 4 est destiné préférentiellement à être visible de l'extérieur du corps de carte 22 (figures 2,3).

Une antenne relais 5 est ici disposée dans le corps de carte et notamment dans un espace correspondant ménagé dans l'insert métallique. Elle peut toutefois être disposée en regard d'un espace correspondant évidé dans la ou les plaques.

Un module à puce et à antenne radiofréquence pourra être agencé dans l'emplacement 13 sur le corps de carte en regard de l'antenne relais pour un couplage radiofréquence.

Alternativement, le module 10 pourra être directement agencé sur l'antenne relais (ou son substrat support 15).

On verra par la suite différentes possibilités d'agencer le module transpondeur 10 par rapport à l'antenne relais 5 et/ou au corps de carte 22.

Selon une caractéristique du mode préféré, le procédé comprend l'étape de formation dans l'insert d'un espace 7 perméable au champ radiofréquence, débouchant sur au moins une face principale 14 de l'insert, ledit espace étant configuré aux dimensions de ladite antenne relais 5 pour la recevoir à l'intérieur et/ou en regard de cet espace.

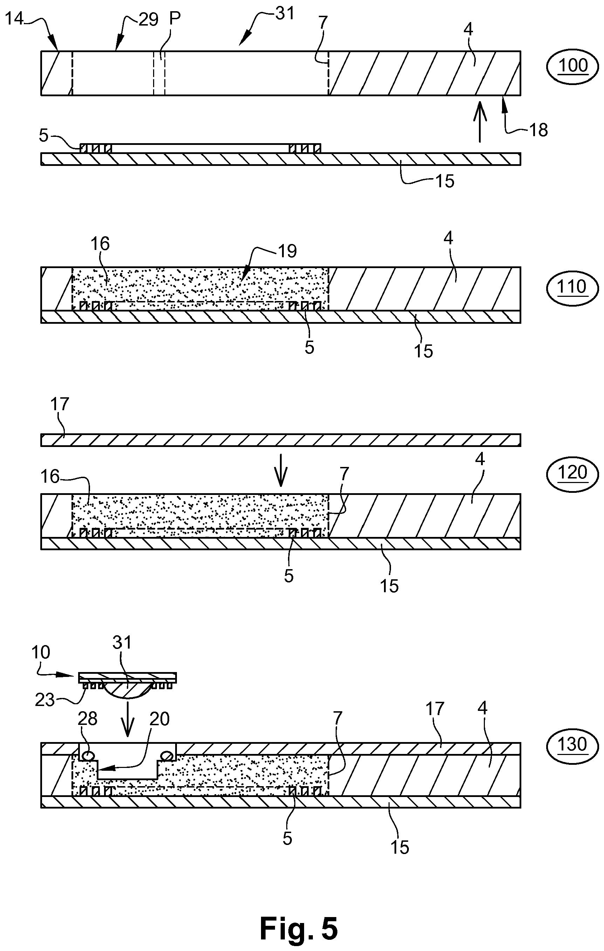

Dans l'exemple de la figure 1A, (correspondant à l'étape 100, fig. 5) l'espace 7 a été usiné par estampage ou fraisage dans la plaque de métal 4.

Le procédé peut prévoir une réalisation de plaque 4 à l'unité ou une série de plaques sur une grande plaque métallique (ou un ruban métallique) qui sera ensuite découpée ou estampée, poinçonnée pour extraire chaque plaque.

L'espace perméable 7 peut se présenter sous forme d'un premier évidement 6 dans une zone de couplage du transpondeur à l'aplomb de l'emplacement 8 du transpondeur radiofréquence 10 et un second évidement 8 s'étendant en direction du centre de la plaque à partir du premier évidement 6. Les deux évidements peuvent communiquer entre eux de préférence mais ce n'est pas indispensable. Il peut y avoir une séparation entre les deux par exemple une barrière métallique de la plaque 4.

L'espace 7 est perméable car il est exempt de métal suite à son enlèvement par usinage.

L'espace 7 est usiné ou dimensionné de manière à correspondre sensiblement aux dimensions de l'antenne relais 5. L'antenne relais peut être comprise dans l'espace 7 (cas d'un module d'antenne relais inséré dans l'espace (fig. 3 et 4) ; Alternativement (non représentée), l'antenne relais peut être en dehors de cet espace tout en lui étant en regard (cas notamment d'une antenne incrustée dans une feuille 15 assemblée à la plaque 4).

La plaque 4 peut comporter une fente 11 coupant la plaque dans son épaisseur et s'étendant d'une périphérie externe (ou bord) 9 de la plaque jusqu'à une périphérie interne dudit espace 7 (ou 8) perméable au champ radiofréquence.

Cependant, grâce aux performances d'une antenne relais associée au module transpondeur, cette fente 11 (ou entrefer) n'est pas indispensable pour satisfaire notamment de performances conformes à des standards bancaires.

Une autre fente alternative 12 (ou supplémentaire par rapport à la fente 14), peut déboucher dans le second évidement.

Selon une caractéristique additionnelle, le procédé du mode préféré prévoit un recouvrement dudit espace 7 par une matière de remplissage 16 et un assemblage d'une feuille de couverture 15 (et/ou 17) sur au moins une face principale de l'insert.

Dans l'exemple figure 5, correspondant à l'étape 100, une feuille 15 comportant l'antenne relais 5 est assemblée par laminage et/ou collage à la plaque métallique après qu'elle ait été évidée pour former l'espace 7.

Une autre feuille 17 peut être assemblée (étape 120) sur la face 18 opposée de la plaque 4 à celle recevant la première feuille 15, après que la matière de remplissage 19 ait été déposée dans l'espace 7.

L'espace 7 peut être rempli d'une matière 19 de remplissage, garnissage telle une résine polymère.

Alternativement, les feuilles de recouvrement épaisses 15, 17 peuvent fluer dans l'espace ou jeu J pour le remplir au cours d'un pressage et chauffage de ces feuilles.

Alternativement, la matière 19 peut être introduite dans l'espace 7 via un orifice dans une des deux feuilles 15 ou 17.

Selon une caractéristique, l'antenne relais peut être réalisée sur un substrat support 15, 25 comme sur les figures 2, 4 ou 5 puis le substrat d'antenne relais est inséré dans l'espace perméable.

Sur les figures 2, 3 et 5, la feuille substrat 15 est assemblée sur la face inférieure 18 en surépaisseur par rapport à la plaque.

Par contre, sur un autre mode de réalisation (fig. 4), le substrat 25 a des dimensions sensiblement inférieures aux dimensions de la cavité 7 et peut donc être inséré dans l'épaisseur « e » de la plaque 4 ;

Alternativement, l'antenne relais 5 peut ne pas être formée sur un substrat mais peut être prédécoupée dans du métal puis est posée dans la cavité 7 sur un fond isolant de la plaque (par exemple, une feuille 15 sans antenne préformée dessus).

L'antenne peut être formée à l'aide de toute technologie de formation d'antenne connue de l'homme de l'art notamment par impression ou jet de matière conductrice.

A la figure 4, le substrat 25 portant l'antenne relais 5 peut être calé dans l'espace 7 à l'aide d'excroissances ou épaulements 26 s'étendant de la face interne de l'espace 7 vers l'intérieur de de l'espace.

L'espace 7 peut donc être configuré de manière à former un plan de calage d'un substrat support 25 de l'antenne relais 5 dans l'épaisseur de l'insert ou de la plaque 4.

L'antenne est ici incrustée par ultrasons dans le substrat support 25. Et une autre feuille de recouvrement ou de décoration 15 est assemblée pour recouvrir l'ouverture de l'espace 7 par-dessus le substrat d'antenne relais.

A l'étape 130, (fig. 5), le procédé peut prévoir de former une cavité 20 de réception (ou emplacement) d'un module transpondeur radiofréquence 10 puis l'encartage de ce module dans son emplacement 6, 13 pour un couplage inductif avec l'antenne relais 5.

Sur la figure 3 est illustré un insert de carte à puce ou une carte à puce radiofréquence 22. La carte comprend un insert de corps 22 de carte avec une antenne relais 5 et un module 10 équipé d'une antenne 23 de module radiofréquence, agencé sur le corps 22 de carte, en regard de l'antenne relais 5 pour un couplage radiofréquence avec elle ;

La carte comprend aussi un espace 7 perméable au champ radiofréquence, formé dans la plaque métallique 4 et débouchant sur au moins une face principale de la plaque métallique ; L'espace est configuré aux dimensions de l'antenne relais 5 pour la recevoir à l'intérieur et/ou pour être en regard de l'antenne relais ;

La carte comprend aussi une matière de remplissages 16 ou 19 recouvrant l'espace 7. La carte peut comprendre alternativement ou cumulativement à cette matière 16, 19, une feuille de couverture 17 assemblée sur au moins une face principale 14 de l'insert 22 ou de la plaque 4.

La figure 4 diffère de la figure précédente en ce que le substrat 25 de l'antenne relais est inséré dans l'épaisseur « e » de la plaque métallique 4. Le substrat 25 reçoit normalement une autre feuille de recouvrement 15 sur sa face externe.

A la figure 3, l'antenne est formée ou supportée directement sur la feuille de recouvrement ou feuille externe 15 pour faciliter la mise en œuvre.

Selon une caractéristique avantageuse, l'invention peut prévoir de réaliser séparément un ensemble « tag » (Bloc ou ensemble de transpondeur radiofréquence) comprenant un assemblage de l'antenne relais avec le module radiofréquence ; Puis ce dernier ensemble « tag » est inséré dans l'espace 7. L'ensemble peut comprendre ou pas de la ferrite. Un tel « tag » est divulgué par le demandeur sous la référence Thales DIS / 0159GCTA.

Le tag comprend de préférence un module purement radiofréquence sans plages de contact 26.

Un tel tag peut comprendre une structure bloc comprenant l'antenne relais noyée dans un corps isolant et un module radiofréquence couplé à cette antenne relais.

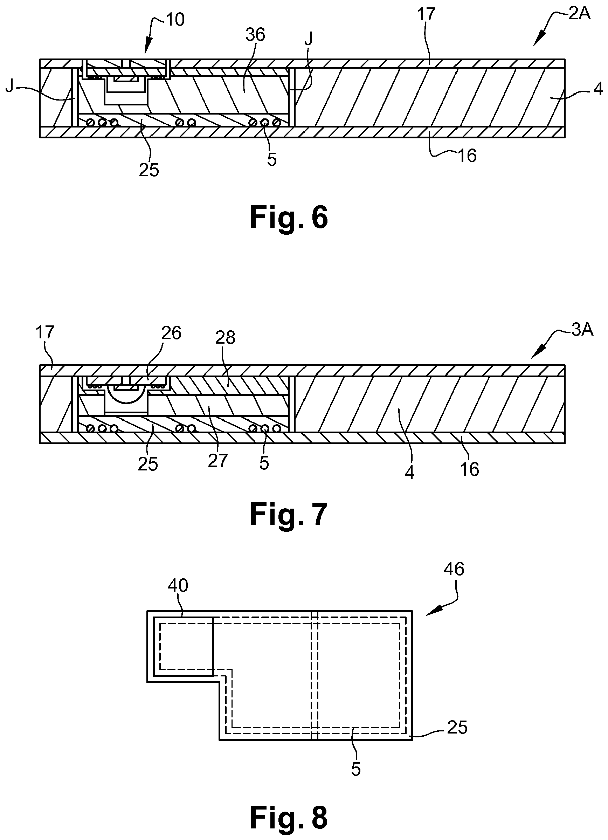

Ce bloc peut être découpé ou formé aux dimensions de l'espace 7 puis inséré dans l'espace 7 de la plaque 4. Ensuite, une feuille de recouvrement peut être assemblée sur chaque face 14, 18 de la plaque notamment à l'aide d'une résine qui peut coller les feuilles et remplir l'interstice (J) entre la structure bloc « tag » et les bords internes de l'espace 7 (fig.6).

L'antenne relais peut être de préférence une antenne relais optimisée configurée sans plaque de condensateur, avec seconde boucle (ou spirale) enchevêtrée dans une première boucle (ou spirale) en sens inverse. Le principe d'une telle antenne relais est décrit dans la demande de brevet internationale WO2016188920 ; Les structures correspondant aux différentes variantes décrites dans cette demande internationale sont intégrées dans la présente demande.

L'antenne relais peut présenter une surface totale comprise entre 1/3 et 1/4 de la surface principale de la carte.

L'antenne relais peut par exemple présenter une surface totale égale à 6 ou 7 fois la surface de l'antenne 23 du module.

Un module radiofréquence 10 selon l'invention peut comprendre ceux connus du domaine de la carte à puce.

Un module de carte à puce peut comporter un substrat isolant, un transpondeur radiofréquence comprenant la puce 30 et l'antenne 23 de module. Ces modules de carte à puce radiofréquence sont généralement encartés dans une cavité 20 du corps de carte 22. La puce radiofréquence 30 et ses connexions à l'antenne de module peuvent être enrobées de matière ou résine de protection 30.

Alternativement, le module peut avoir une structure plus fine si fabriquée comme celle d'une étiquette RFID.

L'invention peut avoir l'avantage de réutiliser une structure connue d'un (mini) « tag » pour l'insérer tel que dans un espace ménagée dans une plaque métallique 4 et former ainsi une carte sans-contact métallique lourde avec de bonnes performances radiofréquences.

Les performances sont sensiblement les mêmes que le tag seul puisque l'espace du tag dans la plaque 4 est perméable au champ électromagnétique.

A la figure 6, est illustrée une carte métallique 2A qui diffère de la structure de la figure 4 par le fait que l'antenne relais 5, ou son insert ou substrat support 25 est assemblé à un bloc polymère ou corps de carte polymère 36 préalablement à son assemblage dans la carte 2A.

L'insert ou bloc 36 peut bénéficier d'un jeu J d'assemblage avec la plaque 4. Ce jeu peut être comblé soit par laminage ou adjonction de résine ou colle d'assemblage des feuilles de couvertures 16, 17.

Le module à antenne 10 est encarté comme aux figures 3 ou 4.

Le bloc 36 (fig.8) peut ensuite être découpé ou extrait (aux dimensions de la cavité 7 de la plaque 4 notamment par poinçonnage, d'une grande feuille comportant une pluralité d'antennes relais. La figure 8 peut illustrer l'antenne relais 5 soit sur un substrat 25, soit sur un bloc 46 (5, 25, 36) comprenant une matière isolante 36 assemblée au substrat 25 d'antenne relais 5.

Alternativement, selon un mode de réalisation pratique, l'antenne relais 5 peut être formée sur (ou noyée dans) un substrat ou bloc de matière polymère (résine de moulage) ou toute matière perméable aux champs électromagnétiques et dont les dimensions correspondent sensiblement ou sont légèrement inférieures à celles d'un évidement (ou cavité) 7 d'une plaque de métal 4.

Alternativement à la figure 6, est illustré un autre mode de réalisation à la figure 7 qui diffère de la figure 6 en ce que le bloc d'antenne relais 46 comporte lui-même un module purement radiofréquence (sans plage de contact externes 26).

Le bloc de l'antenne relais 46 peut comporter un noyau de ferrite 27 assemblé entre le substrat 25 d'antenne relais et une feuille ou couche isolante notamment polymère 28. Ce noyau peut s'étendre sur toute la surface de l'insert 46. Il peut y avoir une cavité de réception d'une partie de module purement sans-contact 40 ménagé dans ce noyau ou plaque de ferrite.

Tout ou partie de ce bloc 46 peut comprendre de la ferrite notamment entre les couches 25 & 26 (pour plus de couplage entre l'antenne relais et le transpondeur).

Le module à puce de transpondeur radiofréquence 40 peut être monté sur un insert 46 de l'antenne relais, lui-même avant ou après son assemblage dans ou avec la plaque métallique.

L'antenne relais 5 peut être déposée nue dans la seconde cavité ou évidement de la plaque, puis recouverte de résine.

Elle peut être formée sur un substrat diélectrique notamment par gravure électrochimique, à la manière d'un module de carte à puce sur un ruban isolant diélectrique.

L'antenne relais peut être de préférence fabriquée ou configurée de manière à former une capacité du fait des spires imbriquées.

Alternativement, l'antenne relais peut comprendre une capacité sous forme de composant de circuit intégré ou CMS (circuit monté en surface). L'avantage est de confiner la fonction capacité dans un petit circuit peu étendu (au lieu de plaques de condensateur pouvant perturber la réception de champ électromagnétique) pour conserver une perméabilité électromagnétique de la matière située dans la surface de couplage de l'antenne relais. Historiquement, une antenne relais comportait des plaques de condensateur assez étendues pour former une capacité (brevet EP1031939 (B1).

L'invention permet d'optimiser le poids maximal de la plaque métallique d'une carte à puce métallique. Elle permet de conserver un poids maximal et des performances radiofréquences optimisées.

L'art antérieur publié ne permettait pas d'avoir des cartes métalliques aussi lourdes avec performances suffisantes pour satisfaire les standards de communication notamment ISO 14443 & EMVCO. Ces cartes nécessitaient en outre (contrairement à l'invention) d'effectuer une fente 11 ou (entrefer) s'étendant du bord d'une plaque jusqu'à un espace de réception d'un module à antenne ou de la cavité 7 (fente 12).

## Revendications

1. Procédé de fabrication d'une carte à puce (1A) radiofréquence, ledit procédé comprenant les étapes de :
- formation d'un corps (22) de carte comportant une antenne relais (5) et une couche de couverture isolante sur au moins une face principale de la carte,
- agencement d'un module (10, 26) équipé d'une antenne de module radiofréquence (23), sur le corps de carte en regard de l'antenne relais pour un couplage radiofréquence ;
**caractérisé en ce qu'**il comprend les étapes suivantes :
- formation d'un insert métallique (4) de corps de carte s'étendant jusqu'aux bords de la carte, ledit insert comportant un espace (7) perméable au champ radiofréquence débouchant sur les deux faces principales de l'insert et comportant ladite antenne relais (5) à l'intérieur et/ou en regard de cet espace.

2. Procédé selon la revendication précédente, **caractérisé en ce que** l'insert comporte ou est formé d'une plaque en métal (4) autour dudit espace (7) perméable au champ radiofréquence.

3. Procédé selon l'une des revendications précédentes, **caractérisé en ce que** l'antenne relais (5) est réalisée sur un substrat support.

4. Procédé selon l'une des revendications précédentes, **caractérisé en ce que** l'espace (7) est configuré de manière à former un plan de calage du substrat support de l'antenne relais dans l'épaisseur (e) de l'insert.

5. Procédé selon l'une des revendications précédentes, **caractérisé en ce que** l'antenne relais (5) avec son substrat support (25) est assemblé à l'insert (4) de manière à positionner l'antenne relais en regard dudit espace perméable.

6. Procédé selon l'une des revendications précédentes, **caractérisé en ce que** le substrat (25) d'antenne relais est inséré dans ledit espace perméable.

7. Procédé selon l'une des revendications précédentes, **caractérisé en ce que** ledit module (10) est inséré dans une cavité ménagée dans le corps de carte.

8. Procédé selon l'une des revendications précédentes, **caractérisé en ce que** ledit module radiofréquence (26) est préalablement assemblé à l'antenne relais (5) puis inséré dans l'espace (7) avec l'antenne relais.

9. Procédé selon l'une des revendications précédentes, **caractérisé en ce que** ladite antenne relais est configurée sans plaque de condensateur et définit une seconde spirale d'antenne enchevêtrée dans une première spirale d'antenne.

10. Procédé selon l'une des revendications précédentes, **caractérisé en ce que** ladite antenne relais (5) présente une surface totale comprise entre un tiers et un quart de la surface principale de la carte.

11. Procédé selon l'une des revendications précédentes, **caractérisé en ce que** ladite antenne relais (5) présente une surface totale égale à trois ou quatre fois la surface de l'antenne (23) du module (10, 23).

12. Procédé selon l'une des revendications précédentes, **caractérisé en ce que** ladite plaque (4) comprend une fente (11) coupant la plaque dans son épaisseur et s'étendant d'une périphérie externe (9) de la plaque jusqu'à une périphérie interne dudit espace (7) perméable au champ radiofréquence.

13. Carte à puce (1A) radiofréquence comprenant:
- un corps (22) de carte comportant une antenne relais (5) et une couche isolante de couverture sur au moins une face principale de ladite carte,
- un module (10, 26) équipé d'une antenne de module radiofréquence (23), agencé sur le corps de carte en regard de l'antenne relais pour un couplage radiofréquence ;
**caractérisé en ce qu'**elle comprend :
- un insert métallique (4) de corps de carte s'étendant jusqu'aux bords de la carte, ledit insert comportant un espace (7) perméable au champ radiofréquence débouchant sur les deux faces principales de l'insert et comportant ladite antenne relais (5) à l'intérieur et/ou en regard de cet espace.

14. Carte selon la revendication précédente, **caractérisée en ce que** l'insert comporte ou est formé d'une plaque en métal (4) autour dudit espace perméable (7).
